# EUROPEAN PATENT APPLICATION

(11) **EP 2 156 923 A1**
(43) Date of publication of application: **24.02.2010**
(21) Application number: 08162618.6
(22) Date of filing: 19.08.2008
(51) Int. Cl.: B23Q 11/06, B26D 7/22, B29B 9/06

(54) **Safety device for holding a blade assembly**

(71) Applicant: Borealis AG, 1220 Vienna (AT)
(72) Inventor: Lackner, Maximilian, 1110 Wien (AT); Affonso, Fabio, 02431-040 Sao Paulo City (BR); Ninci, Marcos, 13.030-730 Bairro Sao Bernardo-Campinas - SP (BR); Sola, Paulo, 13254-624 ItatibaSP (BR)
(74) Representative: Lux, Berthold

(57) **Abstract**

The present invention relates to a cutter assembly cover protecting the user from accidental cuts during exchanging cutter blades, storage handling and transport. The cutter assembly cover is adapted for a cutter assembly having a hub and a cutter ring with a plurality of radially distributed and replaceable cutter blades as used in within the art of water palletizing. The cutter assembly cover comprises a first axial covering portion being adapted for receiving a hub of a cutter assembly, a circumferential covering portion for circumferentially covering a received cutter assembly and a retaining element. Furthermore the circumferential covering portion comprises a lateral aperture and the first axial covering portion comprises a cut out, wherein the lateral aperture and the cut out is adapted for mounting or dismounting a cutter blade to or from a hub with respect to a received cutter assembly.

## Description

### Field of the invention

The present invention relates to a cutter assembly cover for protecting the user in particular his hands from accidental cuts during exchanging cutter blades, as well as storage, handling and transport.

### Background of the invention

A basic type of underwater pelletizer make use of a cutter assembly with a plurality of radially distributed blades mounted thereon. The cutter assembly is adapted to be rotated by a drive shaft and move along a face of a die plate. When molten polymer is extruded as strands through orifices of the die plate into a water box, the cutter blades can cut the extruded strands into pellets. Within the underwater pelletizing the blades of a cutter assembly are wear parts and need to be replaced at regular intervalls. The blades are very sharp and there is a high risk of injury while handling.

In prior art cut-proof protective gloves are used for handling the cutter assembly. However, the protective gloves themselves can be cut during handling and therefore the operator and in particular his hands are exposed to danger. For safety considerations an additional device for protecting the operator from accidental cuts is needed for covering the specific cutter assemblies.

The underwater pelletizers provide various examples of cutter blades. US. Patent No. 4,251,198 discloses a cutter hub with replaceable knife blades, in which the cutter blades are generally rectangular with the elongated side edges being bevelled. The side edges of the blades are oppositely inclined so that the cutting edge on each side can be used by reversing the position of the blades on the cutter hub arm. Subsequent developments in the field of cutter hub assemblies are for example disclosed in the EP 1 582 327 A2.

Dependent upon wear-lifespan or damage on cutting edges the cutter blades need to be changed to maintain optimum machine utilization and pellet quality. Safe maintenance during handling with such sharp components is crucial for operational safety.

### Summary of the invention

It is an object of the present invention to provide a device for ensuring operational safety while handling cutter assemblies having hazardous cutter blades.

This object is met by a cutter assembly cover according to independent claim. Further embodiments are incorporated in the dependent claims.

In the present invention the term "cutter assembly" refers to a cutter assembly with replaceable cutter blades as used in the technology of underwater pelletizing.

According to an exemplary embodiment of the invention there is provided a cutter assembly cover for a cutter assembly having a hub and a cutter ring with a plurality of radially distributed and replaceable cutter blades, wherein the cutter assembly cover comprises a first axial covering portion being adapted for receiving a hub of a cutter assembly and for covering a first side of a received cutter assembly in axial direction, a circumferential covering portion for circumferentially covering a received cutter assembly and a retaining element. The first axial covering portion and the circumferential covering portion are connected. Furthermore the circumferential covering portion comprises a lateral aperture and the first axial covering portion comprises a cut out, which cut out corresponds to the lateral aperture of the circumferential covering portion, wherein the lateral aperture and the cut out being adapted for mounting or dismounting a cutter blade to or from a hub with respect to a received cutter assembly. Furthermore, the retaining element is adapted to prevent rotation of the received cutter assembly within the cutter assembly cover.

The first axial covering portion can receive the first side of a cutter assembly thus covering the received cutter hub in axial direction for protecting mainly the first side of the two-sided cutter blades being mounted on the cutter ring. The first axial covering portion and the circumferential covering portion comprise a common line of contact, thus furthermore covering the received cutter assembly in circumferential direction. Furthermore, a retaining element is used as a bearing to prevent rotation of the received cutter assembly within the cutter assembly cover.

For handling procedures as e.g. exchanging the blades, the cutter assembly cover comprises a suitable aperture. Thus the first axial portion and the circumferential covering portion comprise a cut out and lateral aperture, respectively, which make it possible to mount or dismount a cutter blade to or from a hub of a received cutter assembly without the need to fix the cutter assembly cover by hands. The aperture is formed such that e.g. one cutter hub arm and thereof the cutter blade fixation is accessible for a tool as for example a hex key or screw driver for mounting or dismounting the respective blade.

During mounting or dismounting forces may cause motion of the received cutter assembly. For ensuring stable handling at least one retaining element is integrated in the axial or circumferential covering portion. The retaining element may also be made of bearings or tongues that are formed following the outline of the cutter assembly. For example a cutter assembly having six cutter hub arms six indentations for proper fixation of the cutter assembly can be provided.

According to yet another exemplary embodiment of the invention a cutter assembly cover further comprises a second axial covering portion being releasable connectable to the circumferential covering portion, which second axial covering portion is adapted for covering a second side of a received cutter assembly in axial direction.

When the above described axial and circumferential covering portion is put over a cutter assembly being positioned for example on the ground, also the second side of the cutter assembly is protected in axial direction.

Using a separate and thus releasable second axial covering portion for covering the second side of a received cutter assembly in axial direction, handling is facilitated. This additional covering portion can be connected to the free side of the circumferential covering portion after having received a cutter assembly. By manually pushing the first and second axial covering portions in axial direction together, the position of the cutter assembly cover can be easily changed and finally put into working position. An optimum working position may be provided, when the second axial covering portion is used as a bottom plate, thus leaving the aperture of the first axial covering portion free for access to a selected blade segment. However, also other working positions are possible. After exchanging or reversing a selected blade the operator may lift the first axial covering portion as far as the retaining element does not stop rotation any more and hereafter may move to the next segment that needs to be exchanged. It should be noted that also the second covering portion may have a cut out, which may be correspondingly positioned with respect to the aperture.

According to another exemplary embodiment of the invention the first axial covering portion of the cutter assembly cover comprises a central aperture for handling.

In this way particular handling procedures are significantly facilitated because it becomes easier to handle the cutter assembly cover with one hand. At least one gloved finger may fit into the central aperture for handling and makes it possible to fixate the received cutter assembly when lifting the cutter assembly cover and the received cutter assembly from the ground or a second axial covering portion.

According to another exemplary embodiment of the invention the first axial covering portion of the cutter assembly cover comprises a retaining wall encircling the central aperture.

The retaining wall encircling the central aperture may have similar dimension as the shaft around which the cutter hub usually rotates. Thus an additional retaining element for fixation in the horizontal plane is given. The retaining wall may be not higher than the received hub such that through the central aperture a manual fixation of the cutter hub is still easily possible.

According to another exemplary embodiment of the invention the cutter assembly cover further comprises at least a grip, the grip being attached on the outer circumferential covering portion.

By adding at least one grip the handling is further facilitated and the accidental slipping off the circumferential covering portion is prevented.

According to another exemplary embodiment of the invention the first axial covering portion and the circumferential covering portion are integrally formed as a case.

In this way the covering portion can be manufactured out of one piece, which may be for example cylindrical. For example a plastic or metal working lathe may produce a cutter assembly cover by accounting for the given dimensions as cross section and height of a cutter assembly to be covered.

According to another exemplary embodiment of the invention the case comprises a material selected from a group, the group consisting of rigid synthetic, metal and wood.

The material used for the case are selected from rigid materials as synthetic, metal or wood in order to receive the sharp components of the blade assembly without damaging the blades. The structure of the metal has not necessarily to be exclusively solid but can also comprise for example interlaced metallic rings with internal diameters as used for chain protective gloves.

According to another exemplary embodiment of the invention the second axial covering portion comprises a material selected from a group, the group consisting of rigid synthetic, foam plastic, metal and wood.

The second axial covering portion can be made on the one hand of rigid materials as plastic, metal or wood and on the other hand of soft materials as for example foam plastic.

According to another exemplary embodiment of the invention the retaining element comprises a material selected from a group, the group consisting of rigid synthetic, metal and wood.

The material used for the retaining element can be the same as used for the case. Thus the first axial covering portion, the circumferential covering portion and the retaining element can be made of one piece. It may be useful to arrange the retaining element such that at least two sorts of cutter assemblies can be received although having a different number of cutter blades. It is also possible to insert retaining elements that are not made of the same material as the case body. In this way the case e.g. maybe made of plastic and the retaining element can be counter-sunk by a metal screw or pin for fixation. By providing different screw positions, the screws can be changed according to the specific cutter assembly.

According to another exemplary embodiment of the invention the retaining element is variable in width in respect to azimuthal direction to fit a respective space between two adjacent cutter blades.

In this way, the retaining element may also be varied in width to adapt the retaining element to a respective space between two adjacent cutter blades. This may prevent also a minimal rotational movement of the cutter assembly within the cover.

According to another exemplary embodiment of the invention the first axial covering portion and the circumferential covering portion are adapted such that the lateral aperture and the corresponding cut out are variable in width with respect to azimuthal direction to release a required mounting and dismounting opening for cutter blades.

In this way it is also possible to make the lateral aperture and cut out respectively smaller or wider according to the size of the segment of the cutter assembly. For example a cutter assembly with 32 blade holding cutter hub arms needs a smaller aperture than a cutter assembly with 16 segments.

It should be noted that the above features may also be combined. The combination of the above features may also lead to synergetic effects, even if not explicitly described in detail. In addition it should be pointed out that "comprising" does not exclude other elements, and "a" or "an" does not exclude a plurality of elements.

### Brief description of the drawings

In the following, for further illustration and to provide a better understanding of the present invention exemplary embodiments are described in more details with reference to the enclosed drawings.
Fig. 1 a-c illustrates three different views of an exemplary embodiment of a cutter assembly cover having six cutter hub arms.
Fig. 2 illustrates a perspective view of another exemplary embodiment of a cutter assembly cover with a received cutter assembly having six cutter hub arms.
Fig. 3 illustrates a perspective view of the cut out and lateral aperture of a cutter assembly cover according to an exemplary embodiment of the invention.
Fig. 4 illustrates another exemplary embodiment of a cutter assembly cover with a received cutter assembly having eight cutter hub arms.
Fig. 5 illustrates a cross-sectional view of an exemplary embodiment of a cutter assembly cover with a second axial covering portion.
Fig. 6 shows a perspective view of another exemplary embodiment of a cutter assembly cover with two grips.
Fig. 7 illustrates a perspective view of another exemplary embodiment of a cutter assembly cover with a variable lateral aperture and cut out.

### Detailed description of exemplary embodiments

The illustrations in the figures are diagrammatic and not to scale.

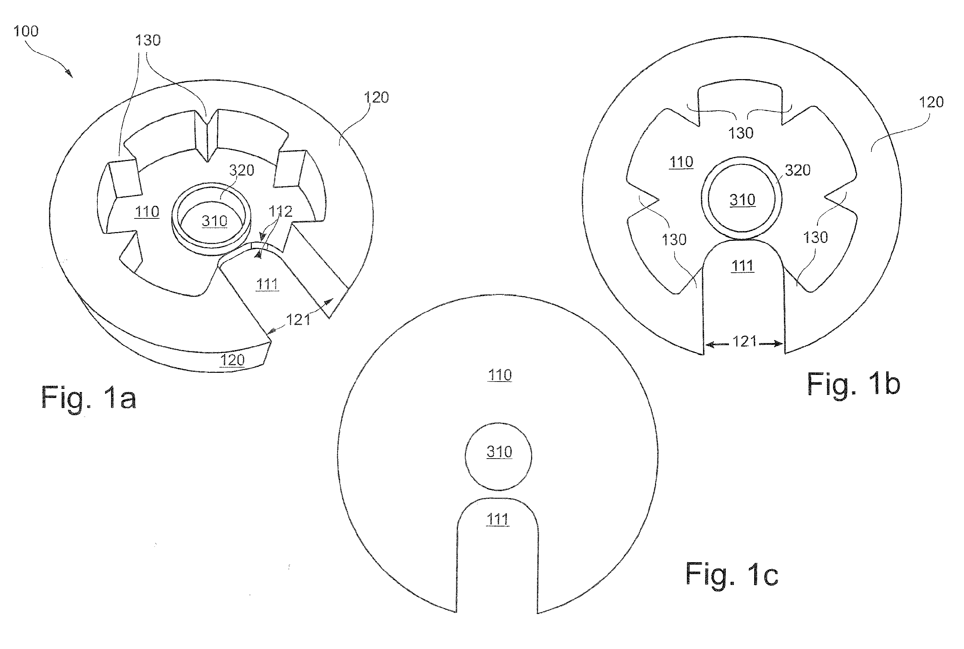

Fig. 1a shows a perspective view, Fig. 1b a view from below and Fig. 1c a plan view of a cutter assembly cover 100. The cutter assembly cover comprises a first axial covering portion 110, which is used as a cover in axial direction. In this arrangement the first axial covering portion 110, a circumferential covering portion 120 and retaining elements 130 are integrally formed. The distance between two retaining elements is adapted to receive one arm of a cutter hub including a replaceable blade. This same distance is the dimension of the lateral aperture 121 in the circumferential covering portion 120. However, also other widths of the aperture are possible. The cut out 111 in the first axial covering portion 110 corresponds to the lateral aperture 121. By this cut out 111 and lateral aperture 121 respectively free access is guaranteed for mounting and dismounting a cutter blade.

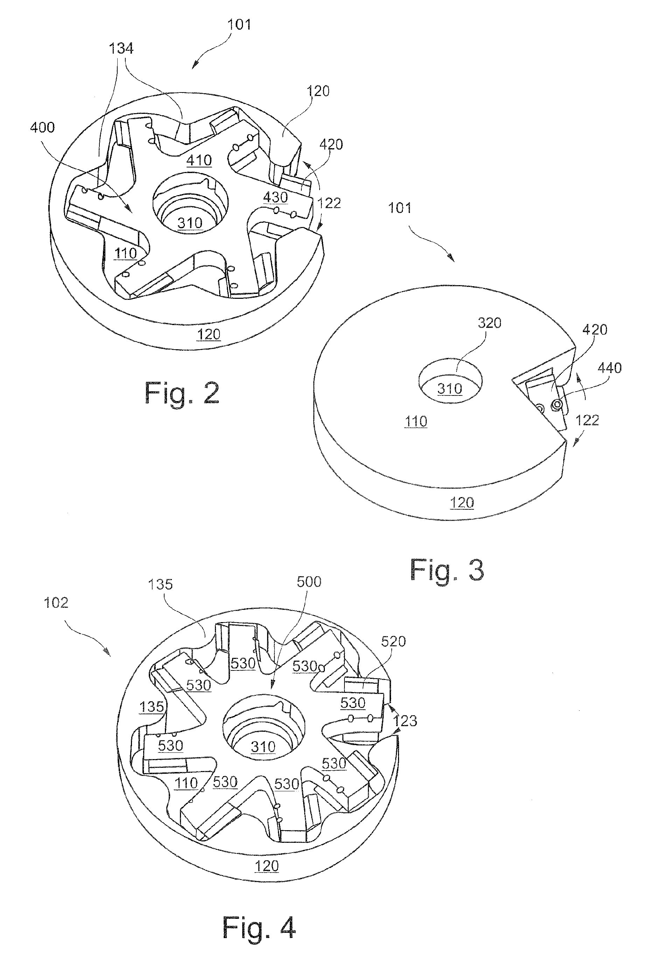

Furthermore Fig. 1 shows a central aperture for handling 310, which is encircled by a retaining wall 320. In this embodiment the retaining wall 310 is about twice as high as the height of the first axial covering portion 110, which is indicated by the arrows 112. In this way an operators' finger can fixate the hub 410 of a received cutter assembly, after passing through the aperture for handling 310 and then lifting the cutter assembly cover 100 together with the received cutter assembly 400, as shown in Fig. 2.

Fig. 2 shows a perspective view of another exemplary embodiment of a cutter assembly cover 101 with a first axial covering portion 110, a circumferential covering portion 120, retaining elements 134, a central aperture for handling 310 and a lateral aperture 122. Additionally a received cutter assembly 400 is illustrated, wherein the cutter assembly 400 comprises a cutter hub 410, a cutter hub arm 430 and attached thereon the cutter blades 420. The retaining elements 134 are roughly following the outline of the received cutter assembly 400 in particular the cutter hub arms 430.

Fig. 3 shows the cutter assembly cover 101 of Fig. 2 upside down. At this view the safety aspect of the present invention is well demonstrated, because all but one cutter blade 420 is covered by the cutter assembly cover 101. The safety requirements are met if the cutter assembly cover 101 lies for example on a working table or any other suited surface (not shown). Furthermore Fig. 3 illustrates an exemplary pair of screws 440 that can be easily reached by a suited tool through the lateral aperture 122 and the corresponding cut out in the first axial covering portion 110. The tool can be for example a hex key for adjusting or loosening the screws.

Fig. 4 shows another exemplary embodiment of a cutter assembly cover 102 with a axial covering portion 110, a circumferential covering portion 120, a lateral aperture 123, a central aperture 310 and a received cutter assembly 500. In Fig.4 a cutter assembly cover 102 for a cutter assembly 500 with eight cutter hub arms 530 and attached cutter blades 520 is illustrated. According to the higher number of cutter hub arms 530 as many retaining elements 135 can be formed as indentations between each segment of the received cutter assembly. The number of blades on a cutter assembly may vary from 4 to 50. In the case of as many blades as for example 32 the indentations have not to be positioned between each cutter hub arm. For fixation one or two retaining elements may also be sufficient. The number of retaining elements depends on the geometry of the cutter assembly and the corresponding form may be a simple pin made of another material as the case body 110 and 120.

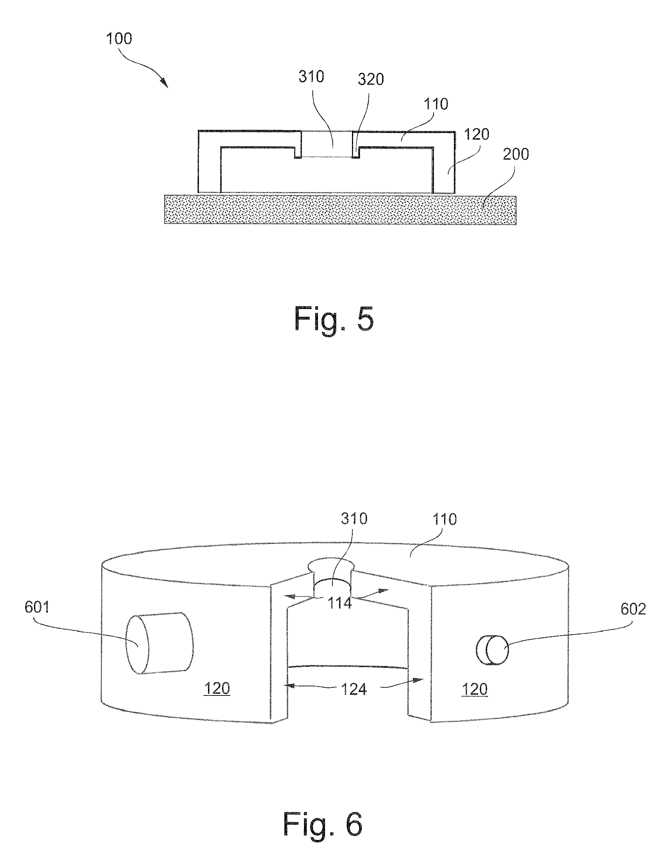

Fig. 5 shows a sectional view of a cutter assembly cover 100 with a first axial covering portion 110, a circumferential covering portion 120, a retaining wall 320 and a second axial covering portion 200. The second axial covering portion 200 serves as a base on which the cutter assembly cover 100 is positioned. The second axial covering portion 200 is releasable connectable to the circumferential covering portion 120. The second axial covering portion 200 can be used during mounting and dismounting the cutter blades or on the other hand during transport.

The following steps may be followed when exchanging knife blades. The operator puts the cutter assembly 400 on the second axial covering portion 200. Hereafter a case formed by the first axial covering portion 110 and the circumferential covering portion 120 is put over the cutter assembly 400 such that the cutter blade 420, which has to be exchanged, is accessible. Alternatively the first axial covering portion receives a cutter assembly and hereafter the second axial covering portion 200 can be put on top of the free contact line of the circumferential covering portion 120. The integrally formed case and the second axial covering portion 200 may be pushed together in order to put the assembly upside down on a stable surface for further maintenance handling. For accessing the next segment the cutter assembly cover 100 has to be lifted and rotated as far as necessary. After rotating and putting down the cutter assembly cover 100, it can be put back into the former position by using the handling aperture 310.

Fig. 6 illustrates another embodiment of the cutter assembly cover with two additional grips 601 and 602 attached to the circumferential covering portion 120. Furthermore this embodiment shows a cut out 114 in the first axial covering portion 110 extending to the central aperture 310. The lateral aperture 124 corresponds to the upper cut out 114. In this way the operating aperture can be easily manufactured by cutting out a symmetrical slice. However for stability and protection reason the smallest possible apertures are recommended.

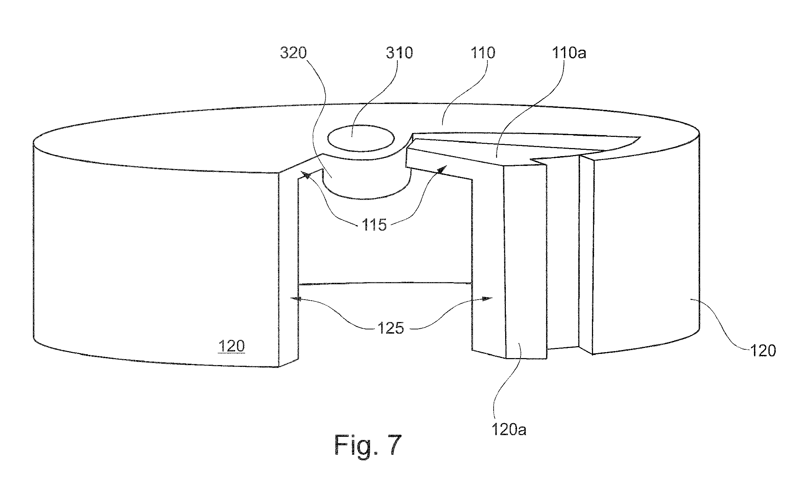

Fig. 7 illustrates another embodiment of the cutter assembly cover wherein the lateral aperture (125) and the corresponding cut out (115) are variable in width with respect to azimuthal direction to release a required mounting and dismounting opening for cutter blades. The variability of the cut out (115) and aperture (125) is provided by a telescoping portion (110a and 120a) that fits into the case formed by the remaining axial covering portion (110) and circumferential covering portion (120). Furthermore a cut through both the telescoping portion (110a and 120a, respectively) and the surrounding case can be provided such that a retaining element, which is formed e.g. as a screw, is capable for fixating a selected width of aperture.

## Claims

1. A cutter assembly cover (100) for a cutter assembly (400) having a hub (410) and a cutter ring with a plurality of radially distributed and replaceable cutter blades (420), the cutter assembly cover comprising:
a first axial covering portion (110) being adapted for receiving a hub (410) of a cutter assembly (400) and for covering a first side of a received cutter assembly in axial direction;
a circumferential covering portion (120) for circumferentially covering a received cutter assembly; and
a retaining element (130);
wherein the first axial covering portion and the circumferential covering portion are connected;
wherein the circumferential covering portion comprises a lateral aperture (121) and the first axial covering portion comprises a cutout (111), which cutout corresponds to the lateral aperture (121) of the circumferential covering portion;
wherein the lateral aperture (121) and the cutout (111) being adapted for mounting or dismounting a cutter blade (420) to or from a hub with respect to a received cutter assembly;
wherein the retaining element (130) is adapted to prevent rotation of the received cutter assembly within the cutter assembly cover.

2. A cutter assembly cover as defined in claim 1, wherein the cutter assembly cover further comprises:
a second axial covering portion (200) being releasable connectable to the circumferential covering portion (120), which second axial covering portion is adapted for covering a second side of a received cutter assembly in axial direction.

3. A cutter assembly cover as defined in claim 1 or 2, wherein the first axial covering portion comprises a central aperture for handling (310).

4. A cutter assembly cover as defined in one of the claims 1 to 3, wherein the first axial covering portion comprises a retaining wall (320) encircling the central aperture.

5. A cutter assembly cover as defined in one of the claims 1 to 4, wherein the cutter assembly cover further comprises at least a grip (601), the grip (601) being attached on the outer circumferential covering portion.

6. A cutter assembly cover as defined in one of the claims 1 to 5, wherein the first axial covering portion (110) and the circumferential covering portion (120) are integrally formed as a case.

7. A cutter assembly cover as defined in claim 6, wherein the case comprises a material selected from a group, the group consisting of:
rigid synthetic;
metal; and
wood.

8. A cutter assembly cover as defined in the claim 2 to 7, wherein the second axial covering portion comprises a material selected from a group, the group consisting of:
rigid synthetic;
foam plastic;
metal; and
wood.

9. A cutter assembly cover as defined in one of the claims 1 to 8, wherein the retaining element (130) comprises a material selected from a group, the group consisting of:
rigid synthetic;
metal; and
wood.

10. A cutter assembly cover as defined in one of the claims 1 to 9, wherein the retaining element (130) is variable in width in respect to azimuthal direction to fit a respective space between two adjacent cutter blades.

11. A cutter assembly cover as defined in one of the claims 1 to 10, wherein the lateral aperture (125) and the corresponding cutout (115) are variable in width with respect to azimuthal direction to release a required mounting and dismounting opening for cutter blades.
